# EUROPÄISCHE PATENTSCHRIFT

(11) **EP 0 668 001 B1**
(45) Veröffentlichungstag und Bekanntmachung des Hinweises auf die Patenterteilung: **04.06.1997**
(21) Anmeldenummer: 93922496.0
(22) Anmeldetag: 18.10.1993
(51) Int. Cl.: H04M 1/72

(54) **VERFAHREN ZUM PROGRAMMIEREN EINER BASISSTATION MIT HILFE EINES MOBILTEILS**
PROCESS FOR PROGRAMMING A BASE STATION USING A MOBILE UNIT
PROCEDE DE PROGRAMMATION D'UNE STATION DE BASE A L'AIDE D'UNE UNITE MOBILE

(30) Priorität: 05.11.1992 DE 4237395
(43) Veröffentlichungstag der Anmeldung: 23.08.1995
(73) Patentinhaber: SIEMENS AKTIENGESELLSCHAFT, 80333 München (DE)
(72) Erfinder: VOGELSANG, Jürgen, D-46395 Bocholt (DE)
(86) Internationale Anmeldenummer: DE9300985
(87) Internationale Veröffentlichungsnummer: WO9410786

(56) Entgegenhaltungen:
- EP-A- 0 447 934
- WO-A-90/03068
- DE-A- 4 105 466

## Beschreibung

Die Erfindung betrifft ein Verfahren gemäß dem Oberbegriff des Patentanspruches 1.

Als zeitgemäße Kommunikations-Endgeräte finden sogenannte Schnurlos-Telefone immer mehr Verwendung. Sie bestehen aus einer Basisstation und einem Mobilteil. Die Basisstation ist über Teilnehmeranschlußleitungen an ein Kommunikationssystem angeschlossen; der Mobilteil enthält Hörkapsel und Mikrofon sowie die für das Herstellen einer Verbindung verantwortliche Tastatur. Die Verbindung zwischen dem Mobilteil und der Basisstation wird über eine drahtlose Funkverbindung hergestellt. Damit kann vom Mobilteil eines Schnurlos-Telefons in einer räumlich definierten Umgebung um die Basisstation eine Kommunikation zu einem weiteren Kommunikations-Endgerät aufgenommen werden.

Die Basisstation kann bei einem als Schnurlos-Telefon ausgestalteten Kommunikations-Endgerät bezüglich der zugeordneten physikalischen und logischen Parameter, nachdem werkseitig eine Grundstellung vorgenommen worden ist, kundenseitig verändert werden. So ist beispielsweise vor Inbetriebnahme als physikalischer Parameter zu definieren, welches Signalisierungsverfahren zum Kommunikationssystem verwendet werden soll. Derartige Programmiervorgänge werden bisher durch an der Basisstation angebrachte externe Schalter bzw. Tasten durchgeführt. So gibt es beispielsweise Schalter bzw. Tasten für die Wahl zwischen Impulswahl/Lautstärke oder Klangfarbe/Lautstärke des Tonrufs. Problematisch daran ist jedoch, daß Änderungen der physikalischen Parameter während des Betriebes vom Mobilteil aus nicht durchgeführt werden können. Weiterhin ist bei herkömmlichen Schnurlos-Telefonen der Mobilteil einer Basisstation unter Benutzung der logischen und physikalischen Parameter fest zugeordnet.

Aus der DE-C2 40 09 074 ist ein Verfahren zur Eingabe von vermittlungstechnischen Kunden- und Betriebsdaten in Kommunikations-Vermittlungsanlagen und/oder programmierbare Kommunikations-Endgeräte bekannt, bei der zwischen einer programmierenden und programmierten Einrichtung sowohl eine Fernübertragung als auch eine Anzeigeeinheit zur Kommunikationskontrolle vorgesehen ist.

Aus der US-5,068,889 ist ferner ein Schnurlos-Telefon bekannt, bei dem mit einem Schnurlos-Mobilteil ein Identitätscode (ID-Code) sowohl in einer Schnurlos-Basisstation als auch in dem Schnurlos-Mobilteil - beispielsweise in ein E²-PROM - einprogrammierbar ist.

Der Erfindung liegt die Aufgabe zugrunde, die physikalischen und logischen Parameter eines als Schnurlos-Telefon ausgestalteten Kommunikations-Endgerätes vom Mobilteil aus flexibel ändern und damit eine praktikable Betriebsweise durchführen zu können.

Die Aufgabe wird, ausgehend vom Oberbegriff des Patentanspruches 1, durch dessen kennzeichnende Merkmale gelöst.

Der Vorteil der Erfindung liegt darin, daß die Basisstation mit Hilfe des zugeordneten Mobilteiles bezüglich ihrer physikalischen und logischen Parameter in einer definierten räumlichen Umgebung um die Basistation programmierbar ist. Dazu wird über die zwischen Basisstation und Mobilteil bestehende drahtlose Funkverbindung ein Meldungs/Quittungsaustausch, der von einer Programmierprozedur gesteuert wird, durchgeführt. Zur Kontrolle des Programmiervorganges sind am Mobilteil eine Anzeigevorrichtung sowie Prozeduren zur zeitlichen Überwachung bzw. syntaktischen Überprüfung der Eingabeparameter vorgesehen.

Gemäß Anspruch 2 ist vorgesehen, daß für die während des Programmiervorganges auswählbaren Parameter charakteristische Symbole auf der Anzeigevorrichtung des Mobilteiles angezeigt werden. Dies hat insbesondere den Vorteil, daß der Programmiervorgang jederzeit kontrolliert und auf einfache Weise durchgeführt werden kann.

Gemäß Anspruch 3 ist vorgesehen, daß bei fehlerhafter Eingabe die Anzeige auf der Anzeigevorrichtung unterdrückt wird. Damit ist der Vorteil einer einfachen Überprüfbarkeit der Eingabe verbunden.

Gemäß Anspruch 4 ist vorgesehen, daß durch eine Timerprozedur das Senden und Empfangen der Parameterwerte zwischen der Basisstation und dem Mobilteil zeitlich überwacht und bei Überschreiten einer bestimmten Zeitspanne der Programmiervorgang abgebrochen wird. Vorteilhaft daran ist, daß der vom Mobilteil aus gestartete Programmiervorgang auch im Grenzbereich der um die Basisstation definierten Umgebung sicher durchgeführt werden kann.

Gemäß Anspruch 5 ist vorgesehen, daß die Programmierprozedur eine Ton-Steuerprozedur ist. Damit ist der Vorteil verbunden, daß Lautstärke und Klangfarbe einer in der Basistation angeordneten akustischen Vorrichtung je nach Bedarf programmierbar ist. So können beispielsweise für die Lautstärke eine vorgesehene Zahl von Lautstärkeparameterwerten ausgewählt werden. Weiterhin kann als Klangfarbe die Frequenz des Ruftones bzw. das den Rufton bildende Puls-/Pausenverhältnis entsprechend einer vorgegebenen Anzahl von möglichen Parameterwerten ausgewählt werden.

Gemäß Anspruch 6 ist vorgesehen, daß die Programmierprozedur eine Parameter-Steuerprozedur ist. Dies hat insbesondere den Vorteil, daß der Basisstation zugeordnete physikalische Parameter eingestellt werden können. Als physikalische Parameter sind dabei beispielsweise die im Anspruch 5 erwähnten Parameter bezüglich der Tonfolge, Lautstärke eines Ruftones zu verstehen; weiterhin können aber auch als physikalische Parameter das zwischen dem Kommunikationsendgerät und dem Kommunikationssystem gewählte Signalisierungsverfahren sowie die zur Anschaltung an ein öffentliches Kommunikationssystem dienende Amtskennzahl (AKZ) betrachtet werden.

Gemäß Anspruch 7 ist vorgesehen, daß die Programmierprozedur eine Daten-Steuerprozedur ist. Damit können insbesondere logische Parameter, die das Zuammenwirken der Basistation mit dem Mobilteil beeinflussen, programmiert werden. Als logische Parameter sind insbesondere die Parameter anzusehen, die eine Zuordnung des Mobilteiles zur Basisstation definieren. So besteht beispielsweise die Möglichkeit, bei dem Vorhandensein einer Vielzahl von Basisstationen die Zuordnung des Mobilteils zu der jeweiligen Basisstation lediglich temporär auszugestalten. Dies bedeutet, daß der Mobilteil je nach Bedarf von der ihm gerade zugeordneten Basisstation abgemeldet und einer anderen Basisstation zugeordnet wird. Weiterhin besteht die Möglichkeit, daß bei einem externen Ruf an eine Basisstation und damit zu dem dieser zugeordneten Mobilteil bei Nichtannahme zu weiteren Mobilteilen weitergeschaltet wird. Damit ist der Vorteil eines praktikablen und flexiblen Einsatzes von Schnurlos-Telefonen im Bürobereich verbunden.

Gemäß Anspruch 8 ist vorgesehen, daß bei einem Programmiervorgang lediglich ein einziger Parameter geändert wird. Damit ist der Vorteil einer größeen Überschaubarkeit über den jeweiligen Programmiervorgang verbunden.

Gemäß Anspruch 9 ist vorgesehen, daß im Zuge eines Programmiervorgangs auch eine Mehrzahl von Parametern eingestellt werden kann. Damit ist der Vorteil einer Dynamisierung des Programmiervorganges verbunden.

Gemäß Anspruch 10 ist eine Anordnung zur Durchführung des Verfahrens vorgesehen. Damit ist der Vorteil einer übersichtlichen und handhabungsfreundlichen Ausgestaltung verbunden.

Im folgenden wird die Erfindung anhand eines Ausführungsbeispiels näher erläutert. Es zeigen:
Figur 1 die Basisstation sowie den ihr zugeordneten Mobilteil,
Figur 2 ein Flußdiagramm des erfindungsgemäßen Verfahrens.

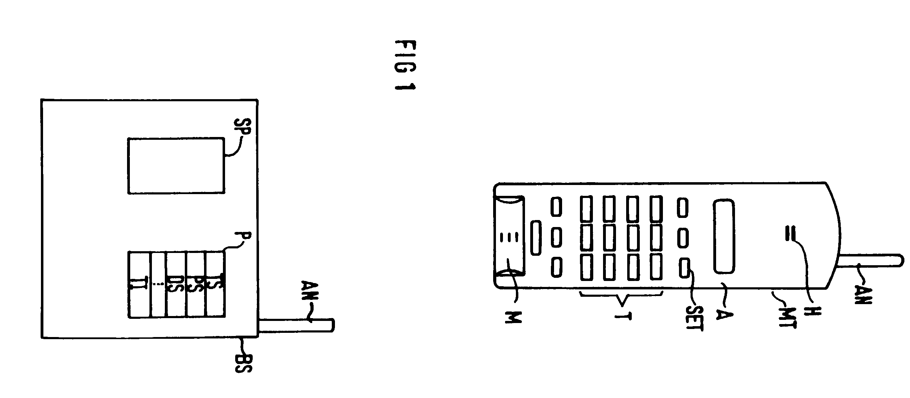

In Figur 1 sind die Basisstation BS und der Mobilteil MT aufgezeigt. Am Mobilteil sind ein Mikrofon M, eine Hörkapsel H sowie eine Anzeigevorrichtung A angeordnet. Weiterhin sind eine Tastatur T, die üblicherweise für den Aufbau einer Verbindung zu einem anderen Kommunikationsendgerät dienlich ist, sowie eine Programmiertaste SET aufgezeigt. Ferner ist im Mobilteil MT eine Sende-/Empfangseinrichtung mit einer Antenne AN vorgesehen, die zum Aufbau einer drahtlosen Funkverbindung zur Basistation BS dient. Die Basissstation BS ist über entsprechend ausgestaltete Teilnehmeranschlußleitungen an ein Kommunikationssystem herangeführt. Sie weist zur Herstellung einer drahtlosen Funkverbindung zum Mobilteil MT ebenfalls eine Sende-/Empfangseinrichtung sowie eine Antennen AN auf. Weiterhin ist in der Basisstation BS ein Basis-Datenspeicher SP angeordnet. Hier sind in den jeweiligen Speicherzellen Parameterwerte der aktuellen physikalischen und logischen Parameter, die zum Betrieb der Basisstation BS notwendig sind, abgelegt. Weiterhin ist in der Basisstation BS eine den jeweiligen Programmiervorgang bestimmende Programmierprozedur P aktivierbar. Sie besteht aus einer Ton-Steuer-Prozedur TS, einer Parameter-Steuerprozedur PS sowie einer Daten-Steuer-prozedur DS. Durch die Ton-Steuer-Prozedur TS werden Lautstärke/Klangfarbe des Ruftones eingestellt. Die Parameter-Prozedur PS stellt die physikalischen Parameter der Basisstation BS ein. So werden hier das Signalisierungsverfahren zum Kommunikationssystem - also ob Impulswahl oder Mehrfrequenzwahl programmiert werden soll - sowie die für die Erstinbetriebnahme zur Anschaltung an das öffentliche Kommunikationssystem wesentliche Amtskennzahl AKZ eingestellt. Weiterhin werden über die Daten-Steuer-Prozedur DS logische Parameter, die das Zusammenwirken zwischen Basisstation BS und Mobilteil MT beeinflussen, programmiert. Beispielsweise kann über die Daten-Steuerprozedur DS die feste Zuordnung eines Mobilteils MTR zu einer Basisstation BS aufgehoben und geändert werden. Weiterhin besteht die Möglichkeit, daß bei Nichtinempfangnehmen eines an einem Mobilteil MT ankommenden Rufes eine Umleitung zu wenigstens einem anderen Mobilteil MT erfolgt.

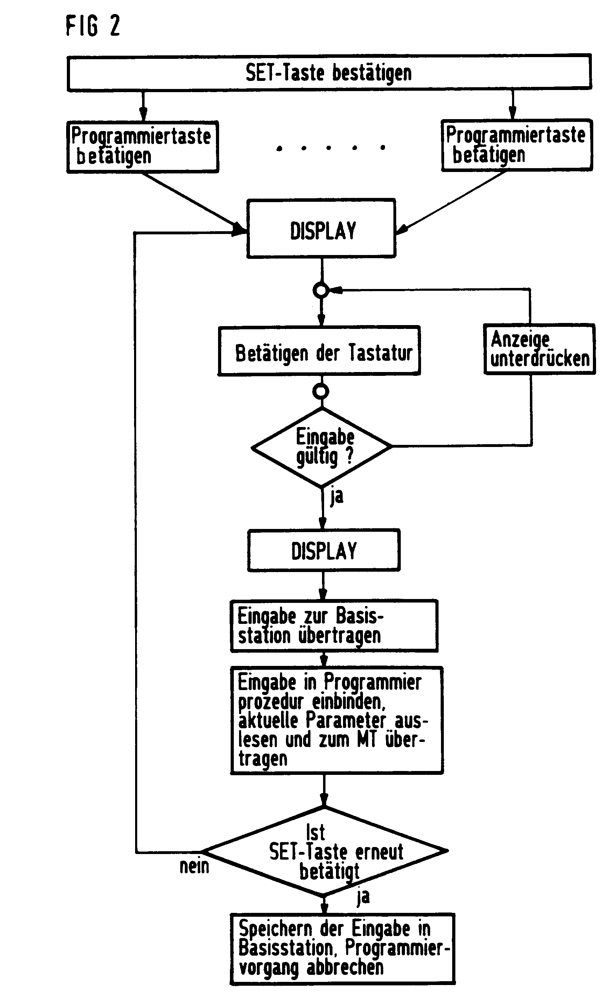

In Figur 2 ist das erfindungsgemäße Verfahren in Form eines Flußdiagramms aufgezeigt. Im folgenden soll davon ausgegangen werden, daß die Lautstärke sowie die Klangfarbe des Ruftones der in der Basisstation BS angeordneten akustischen Vorrichtung vom Mobilteil MT aus geändert werden sollen. Zu diesem Zweck sind im Basis-Datenspeicher SP die für den momentanen Betriebszustand voreingestellten und damit aktuellen Parameterwerte abgelegt. Beispielsweise ist für die Tonhöhe eine Ziffer zwischen 1 und 10 sowie für die Klangfarbe in einer anderen Speicherzelle eine Ziffer zwischen 1 und 5 abgespeichert. Dabei ist eine der Ziffern 1 bis 10 einer bestimmten Tonhöhe zugeordnet; weiterhin ist einer der Ziffern 1 bis 5 in gleicher Weise eine bestimmte Klangfarbe zugeordnet.

Der Programmiervorgang wird durch Betätigen der am Mobilteil MT angeordneten SET-Taste eingeleitet. Unmittelbar daran anschließend wird durch Betätigen einer weiteren Taste der Programmiervorgang näher bestimmt. Welche der in der Basisstation BS ablaufenden Programmierprozeduren TS, PS, DS gestartet werden, hängt dabei insbesondere vom Betätigen dieser weiteren Taste ab. Sie bestimmt, welche der Prozeduren TS, PS, DS initialisiert und gestartet werden. Im Ausführungsbeispiel soll - wie soeben erläutert - die Tonhöhe sowie die Klangfarbe des Ruftons geändert werden. In diesem Fall werden - nach Betätigen der den Programmiervorgang bestimmenden weiteren Taste - auf der auf dem Mobilteil MT angeordneten Anzeigevorrichtung A zwei für die jeweilige Auswahl charakteristische Symbole angezeigt. Diese geben Aufschluß darüber, ob die Tonhöhe oder die Klangfarbe geändert werden sollen. In vorliegendem Ausführungsbeispiel soll dies die Tonhöhe sein. In diesem Fall muß das auf der Anzeigevorrichtung A für die Tonhöhe charakteristische Symbol mit der Tastatur T markiert werden. Die Eingabe wird von einer Prüfprozedur auf Gültigkeit und Vollständigkeit überwacht. Ist das Ergebnis der Bewertung der Prüfprozedur positiv, wird die Eingabe auf der Anzeigevorrichtung A angezeigt, andernfalls wird die Anzeige unterdrückt. Der derart markierte Parameter wird anschließend über die drahtlose Funkverbindung zur Basisstation BS übertragen. Dort wird der übertragene und markierte Parameter in die Ton-Steuer-Prozedur TS eingebunden. Diese adressiert in Abhängigkeit vom übertragenen und markierten Parameter die entsprechende Speicherzelle des Basis-Datenspeichers SP. Der dort abgespeicherte aktuelle Parameterwert wird von der Ton-Steuer-Prozedur TS ausgelesen und über die drahtlose Funkverbindung zum Mobilteil MT übertragen. Dort wird derselbe auf der Anzeigevorrichtung A angezeigt. Mit Hilfe der Tastatur T besteht nun die Möglichkeit, den derart angezeigten aktuellen Parameterwert durch eine erneute Eingabe im vorgegebenen Zahlenbereich - im Ausführungsbeispiel also von 1 bis 10 - zu ändern. Durch Betätigen der Tastatur T wird der neue Parameterwert nach Überprüfung durch die Prüfprozedur auf der Anzeigevorrichtung A angezeigt und der bis dahin geltende aktuelle Parameterwert überschrieben. Im weiteren wird der neue Parameterwert über die drahtlose Funkverbndung zur Basisstation BS übertragen. Wird nun erneut die SET-Taste betätigt, wird damit die Ton-Steuer-Prozedur TS veranlaßt, den neuen Parameterwert in die jeweilige Speicherzelle des Basisdatenspeichers SP einzuschreiben und abzuspeichern. Damit wird nun der derart programmierte Parameterwert als aktueller Parameterwert verwendet. Damit ist dann der Prorammiervorgang beendet. Der Programmiervorgang wird durch eine Timerprozedur zeitlich überwacht. Dies bedeutet, daß bei Überschreiten einer fest definierten Zeitspanne der Programmiervorgang abgebrochen und erneut gestartet werden muß. Weiterhin kann beim Programmiervorgang lediglich ein einziger Parameterwert geändert werden. Allerdings sind auch Ausgestaltungen möglich, im Zuge derer während eines Programmiervorganges eine Mehrzahl von Parameterwerten eingestellt werden kann.

## Patentansprüche

1. Verfahren zum Programmieren einer Basisstation (BS) eines Kommunikations-Endgerätes (KE) mit Hilfe eines diesem zugehörigen Mobilteils (MT), wobei die Basisstation (BS) und der Mobilteil (MT) über eine drahtlose Funkverbindung Informationen austauschen,
**dadurch gekennzeichnet,**
daß der Programmiervorgang durch Betätigen einer am Mobilteil (MT) angeordneten ersten Taste (SET) eingeleitet wird, daß anschließend durch Betätigen einer, den jeweiligen Programmiervorgang bestimmenden, am Mobilteil (MT) angeordneten zweiten Taste zum einen eine drahtlose Funkverbindung zur Basisstation (BS) hergestellt und dadurch in derselben eine den Programmiervorgang bestimmende Programmierprozedur (P) initialisiert wird, und zum anderen eine Anzeigevorrichtung (A) des Mobilteiles (MT) für eine Darstellung einer Anzahl von für den Programmiervorgang auswählbaren Parametern angesteuert wird,
daß dann in Abhängigkeit vom Programmierwunsch über eine am Mobilteil (MT) angeordnete Tastatur (T) aus der Anzahl der Parameter wenigstens ein Parameter markiert wird und den jeweiligen Parameter bezeichnende Angaben zur Basisstation (BS) übertragen, und dort in die Programmierprozedur (P) eingebunden werden,
daß unter der Steuerung der Programmierprozedur (P) in Abhängigkeit von den mitgeteilten Angaben eine diesen jeweils zugeordnete Speicherzelle eines Basis-Datenspeichers (SP) adressiert, der dort abgespeicherte aktuelle Parameterwert ausgelesen und über die drahtlose Funkverbindung zum Mobilteil (MT) gesendet wird,
daß der derart übertragene Parameterwert auf der Anzeigevorrichtung (A) angezeigt wird, derselbe durch Betätigen der am Mobilteil (MT) angeordneten Tastatur (T) wahlweise änderbar ist und der derart geänderte Parameterwert durch eine Prüfprozedur in bezug auf Gültigkeit und Vollständigkeit der Eingabe überprüft und anschließend auf der Anzeigevorrichtung (A) angezeigt wird, und
daß der Programmiervorgang durch erneutes Betätigen der ersten Taste (SET) beendet und damit der geänderte Parameterwert über die drahtlose Funkverbindung zur Basisstation (BS) übertragen und dort in den Basis-Datenspeicher (SP) eingeschrieben wird.

2. Verfahren nach Anspruch 1, **dadurch gekennzeichnet**, daß für die auswählbaren Parameter charakteristische Symbole auf der Anzeigevorrichtung (A) angezeigt werden.

3. Verfahren nach Anspruch 1 oder 2, **dadurch gekennzeichnet**, daß bei fehlerhafter Eingabe die Anzeige auf der Anzeigevorrichtung (A) unterdrückt wird.

4. Verfahren nach Anspruch 1, 2 oder 3, **dadurch gekennzeichnet**, daß durch eine Timer-Prozedur (TI) das Senden und Empfangen der Parameterwerte zwischen der Basisstation (BS) und dem Mobilteil (MT) zeitlich überwacht und bei Überschreiten einer bestimmten Zeitspanne der Programmiervorgang abgebrochen wird.

5. Verfahren nach einem der Ansprüche 1, 2, 3 oder 4, **dadurch gekennzeichnet**, daß die Programmierprozedur (P) eine Ton-Steuer-Prozedur (TS) ist, durch die Lautstärke und Klangfarbe einer an der Basisstation (BS) angeordneten akustischen Vorrichtung programmierbar ist.

6. Verfahren nach Anspruch 1, 2, 3 oder 4, **dadurch gekennzeichnet**, daß die Programmierprozedur (P) eine Parameter-Steuerprozedur (PS) ist, durch die die physikalischen Parameter der Basisstation (BS) einstellbar sind.

7. Verfahren nach Anspruch 1, 2, 3 oder 4, **dadurch gekennzeichnet**, daß die Programmierprozedur (P) eine Daten-Steuer-prozedur (DS) ist, durch die verschiedene Parameter, die das Zusammenwirken der Basisstation (BS) mit dem Mobilteil (MT) beeinflussen, bestimmbar sind.

8. Verfahren nach einem der vorhergehenden Ansprüche, **dadurch gekennzeichnet**, daß beim Programmiervorgang lediglich ein einziger Parameterwert geändert wird.

9. Verfahren nach einem der vorhergehenden Ansprüche, **dadurch gekennzeichnet,** daß im Zuge eines Programmiervorgangs eine Mehrzahl von Parameterwerten eingestellt wird.

10. Schaltungsanordnung zur Durchführung des Verfahrens nach einem der Ansprüche 1 bis 9, mit einem Mobilteil (MT) und einer Basisstation (BS), wobei die Basisstation (BS) und der Mobilteil (MT) über eine drahtlose Funkverbindung Informationen austauschen,
**dadurch gekennzeichnet**,
daß der Mobilteil (MT) Mittel zum Einleiten des Programmiervorganges (SET) aufweist,
daß der Mobilteil (MT) weitere,den jeweiligen Programmiervorgang bestimmende Mittel aufweist,die derart ausgebildet sind, daß zum einen eine drahtlose Funkverbindung zur Basisstation (BS) hergestellt und dadurch in derselben eine den Programmiervorgang bestimmende Programmierprozedur (P) initialisiert wird und zum anderen eine Anzeigevorrichtung (A) des Mobilteils (MT) für eine Darstellung einer Anzahl von für den Programmiervorgang auswählbaren Parametern angesteuert wird,
daß der Mobilteil (MT) eine Tastatur (T) aufweist, die derart ausgebildet ist,daß in Abhängigkeit vom Programmierwunsch aus der Anzahl der Parameter wenigstens ein Parameter markiert wird und den jeweiligen Parameter bezeichnende Angaben zur Basisstation (BS) übertragen und dort in die Programmierprozedur (P) eingebunden werden,
daß eine Speicherzelle eines Basisdatenspeichers (SP) vorgesehen ist, die derart ausgebildet ist, daß aus derselben unter der Steuerung der Programmierprozedur (P) in Abhängigkeit von den mitgeteilten Angaben der dort abgespeicherte aktuelle Parameterwert ausgelesen und über die drahtlose Funkverbindung zum Mobilteil (MT) gesendet wird,
daß die Anzeigevorrichtung (A) des Mobilteils (MT) derart ausgebildet ist, daß der übertragene Parameterwert angezeigt wird,
daß die Tastatur (T) des Mobilteils (MT) derart ausgebildet ist, daß der übertragene Parameterwert wahlweise änderbar ist und durch eine Prüfprozedur in Bezug auf Gültigkeit und Vollständigkeit der Eingabe überprüft und anschließend auf der Anzeigevorrichtung (A) angezeigt wird, und
daß die Mittel zum Einleiten des Programmiervorganges (SET) des Mobilteils (MT) derart ausgebildet sind, daß durch deren erneutes Betätigen der Programmiervorgang beendet und damit der geänderte Parameterwert über die drahtlose Funkverbindung zur Basisstation (BS) übertragen und dort in den Basisdatenspeicher (SP) eingeschrieben wird.

## Claims

1. Process for programming a base station (BS) ot a communication terminal (KE) using a mobile unit (MT) associated with the latter, the base station (BS) and the mobile unit (MT) exchanging information via a wireless radio link, characterized in that the programming operation is initiated by actuating a first button (SET), arranged on the mobile unit (MT), in that subsequently, by actuating a second button, arranged on the mobile unit (MT) and determining the respective programming operation, on the one hand a wireless radio link to the base station (BS) is established and, as a result, a programming procedure (P) determining the programming operation is initialized in the same, and on the other hand a display device (A) of the mobile unit (MT) is activated for a representation of a number of parameters which can be selected for the programming operation, characterized in that then, in dependence on the programming request, at least one parameter from the number of parameters is marked by means of a keyboard (T), arranged on the mobile unit (MT), and details specifying the respective parameter are transmitted to the base station (BS), and are incorporated there into the programming procedure (P), in that, under the control of the programming procedure (P) and in dependence on the details given, a memory cell respectively assigned to the latter of a base data memory (SP) is addressed, the current parameter value stored there is read out and is sent via the wireless radio link to the mobile unit (MT), in that the parameter value transmitted in this way is displayed on the display device (A), the same value can be altered according to choice by actuating the keyboard (T), arranged on the mobile unit (MT), and the parameter value altered in such a way is checked by a checking procedure with respect to validity and completeness of the entry and, subsequently, is displayed on the display device (A), and, in that the programming operation is ended by renewed actuation of the first button (SET) and consequently the altered parameter value is transmitted via the wireless radio link to the base station (BS) and is written there into the base data memory (SP).

2. Process according to Claim 1, characterized in that symbols characteristic of the selectable parameters are displayed on the display device (A).

3. Process according to Claim 1 or 2, characterized in that, if the entry contains errors, the display on the display device (A) is suppressed.

4. Process according to Claim 1, 2 or 3, characterized in that the sending and receiving of the parameter values between the base station (BS) and the mobile unit (MT) is time-monitored by a timer procedure (TI) and, if a specific time period is exceeded, the programming operation is abnormally terminated.

5. Process according to one of Claims 1, 2, 3 or 4, characterized in that the programming procedure (P) is a sound-control procedure (TS), by which the volume and timbre of an acoustic device arranged at the base station (BS) can be programmed.

6. Process according to Claim 1, 2, 3 or 4, characterized in that the programming procedure (P) is a parameter-control procedure (PS), by which the physical parameters of the base station (BS) can be set.

7. Process according to Claim 1, 2, 3 or 4, characterized in that the programming procedure (P) is a data-control procedure (DS), by which various parameters which influence the interaction of the base station (BS) with the mobile unit (MT) can be determined.

8. Process according to one of the preceding claims, characterized in that in the programming operation only a single parameter value is altered.

9. Process according to one of the preceding claims, characterized in that in the course of a programming operation a multiplicity of parameter values are set.

10. Circuit arrangement for implementing the process according to one of Claims 1 to 9, having a mobile unit (MT) and a base station (BS), the base station (BS) and the mobile unit (MT) exchanging information via a wireless radio link, characterized in that the mobile unit (MT) has means for initiating the programming operation (SET), in that the mobile unit (MT) has further means, which determine the respective programming operation and are designed in such a way that on the one hand a wireless radio link to the base station (BS) is established and, as a result, a programming procedure (P) determining the programming operation is initialized in the same, and on the other hand a display device (A) of the mobile unit (MT) is activated for a representation of a number of parameters which can be selected for the programming operation, in that the mobile unit (MT) has a keyboard (T), which is designed in such a way that, in dependence on the programming request, at least one parameter from the number of parameters is marked and details specifying the respective parameter are transmitted to the base station (BS) and are incorporated there into the programming procedure (P), in that a memory cell of a base data memory (SP) is provided, which cell is designed in such a way that, under the control of the programming procedure (P) and in dependence on the details given, the current parameter value stored there is read out from the same and is sent via the wireless radio link to the mobile unit (MT), in that the display device (A) of the mobile unit (MT) is designed in such a way that the transmitted parameter value is displayed, in that the keyboard (T) of the mobile unit (MT) is designed in such a way that the transmitted parameter value can be altered according to choice and is checked by a checking procedure with respect to validity and completeness of the entry and, subsequently, is displayed on the display device (A), and in that the means for initiating the programming operation (SET) of the mobile unit (MT) are designed in such a way that, by renewed actuation, the programming operation is ended and consequently the altered parameter value is transmitted via the wireless radio link to the base station (BS) and is written there into the base data memory (SP).

## Revendications

1. Procédé pour la programmation d'une station de base (BS) d'un terminal de communication (KE) en utilisant un combiné mobile (MT) faisant partie de ce terminal, la station de base (BS) et le combiné mobile (MT) échangeant entre eux des informations grâce à une liaison radioélectrique sans fil,
**caractérisé par**
le fait que le processus de programmation est initié en actionnant une première touche (SET) placée sur le combiné mobile (MT),
le fait qu'en actionnant ensuite une deuxième touche placée sur le combiné mobile (MT) et qui détermine le processus de programmation souhaité, d'une part, une liaison radioélectrique sans fil est établie avec la station de base (BS) et, ainsi, une procédure de programmation (P) déterminant le processus de programmation est initialisée dans cette station de base et, d'autre part, un dispositif d'affichage (A) du combiné mobile (MT) est activé pour représenter une pluralité de paramètres qui peuvent être sélectionnés pour le processus de programmation,
le fait que, alors, en fonction de la programmation souhaitée et grâce à un clavier (T) placé sur le combiné mobile (MT), au moins un paramètre est marqué parmi la pluralité de paramètres et que des données caractérisant chacun des paramètres sont transmises à la station de base (BS) et y sont insérées dans la procédure de programmation (P),
le fait que, sous la commande de la procédure de programmation (P) et en fonction des données transmises, une cellule d'une mémoire de base (SP) correspondant à ces données est adressée, la valeur de paramètre actuelle qui y est stockée est lue, puis envoyée au combiné mobile (MT) par l'intermédiaire de la liaison radioélectrique sans fil,
le fait que la valeur du paramètre, qui a été ainsi transmise, est affichée sur le dispositif d'affichage (A), que celle-ci peut être modifiée par options en actionnant le clavier (T) placé sur le combiné mobile (MT) et que la valeur du paramètre, ainsi modifiée, est contrôlée par une procédure de vérification en ce qui concerne la validité et l'intégralité de la saisie et, ensuite, affichée sur le dispositif d'affichage (A), et
le fait que le processus de programmation est achevé en actionnant une nouvelle fois la première touche (SET) et, ainsi, la valeur modifiée du paramètre est transmise, par l'intermédiaire de la liaison radioélectrique sans fil, à la station de base (BS) et y est stockée dans la mémoire de base (SP).

2. Procédé conformément à la revendication 1 **caractérisé** par le fait que, pour les paramètres qui peuvent être choisis, des symboles caractéristiques sont affichés sur le dispositif d'affichage (A).

3. Procédé conformément à la revendication 1 ou 2 **caractérisé** par le fait que, en cas de saisie erronée, l'affichage sur le dispositif d'affichage (A) est supprimé.

4. Procédé conformément à la revendication 1, 2 ou 3 **caractérisé** par le fait que, grâce à une procédure de minuterie (TI), la durée de l'émission et de la réception des valeurs de paramètres entre la station de base (BS) et le combiné mobile (MT) est surveillée et, dans le cas où elle dépasse un laps de temps déterminé, le processus de programmation est interrompu.

5. Procédé conformément à la revendication 1, 2, 3 ou 4 **caractérisé** par le fait que la procédure de programmation (P) est une procédure de commande du son (TS) qui permet de programmer le volume et le timbre d'un dispositif acoustique placé dans la station de base (BS).

6. Procédé conformément à la revendication 1, 2, 3 ou 4 **caractérisé** par le fait que la procédure de programmation (P) est une procédure de commande des paramètres (PS) grâce à laquelle les paramètres physiques de la station de base (BS) peuvent être réglés.

7. Procédé conformément à la revendication 1, 2, 3 ou 4 **caractérisé** par le fait que la procédure de programmation (P) est une procédure de commande des données (DS) grâce à laquelle les différents paramètres qui influent sur l'interaction entre la station de base (BS) et le combiné mobile (MT) peuvent être définis.

8. Procédé conformément à une des revendications précédentes **caractérisé** par le fait que, lors du processus de programmation, une seule valeur de paramètre peut être modifiée.

9. Procédé conformément à une des revendications précédentes **caractérisé** par le fait que, au cours du processus de programmation, une pluralité de valeurs de paramètre peut être réglée.

10. Montage pour la mise en oeuvre du procédé conforme à l'une des revendications 1 à 9, avec un combiné mobile (MT) et une station de base (BS), la station de base (BS) et le combiné mobile (MT) échangeant des informations par l'intermédiaire d'une liaison radioélectrique sans fil,
**caractérisé par**
le fait que le combiné mobile (MT) comporte des moyens (SET) pour initialiser le processus de programmation,
le fait que le combiné mobile (MT) comporte d'autres moyens déterminant chaque processus de programmation et qui sont constitués de telle sorte que, d'une part, une liaison radioélectrique sans fil est établie avec la station de base (BS) et, ainsi, dans cette dernière, une procédure de programmation (P) déterminant le processus de programmation est initialisée et, d'autre part, un dispositif d'affichage (A) du combiné mobile (MT) est excité pour représenter une pluralité de paramètres qui peuvent être sélectionnés pour le processus de programmation
le fait que le combiné mobile (MT) comporte un clavier (T) qui est constitué de telle sorte que, en fonction de la programmation recherchées au moins un paramètre, parmi la pluralité des paramètres, peut être marqué et que des données désignant chaque paramètre sont transmises à la station de base (BS) puis y sont intégrées dans la procédure de programmation (P),
le fait qu'une cellule d'une mémoire de base (SP) est prévue et est constituée de telle sorte que, sous la commande de la procédure de programmation (P) et en fonction des données qui lui sont transmises, la valeur actuelle du paramètre qui y est stockée, est lue, puis transmise au combiné mobile (MT) par l'intermédiaire de la liaison radioélectrique sans fil,
par le fait que le dispositif d'affichage (A) du combiné mobile (MT) est constitué de telle sorte que la valeur du paramètre transmise est affichée,
par le fait que le clavier (T) du combiné mobile (MT) est constitué de telle sorte que la valeur du paramètre transmise est modifiable par options et vérifiée, en ce qui concerne sa validité et son intégralité, par une procédure de vérification, puis est affichée sur le dispositif d'affichage (A) et
par le fait que les moyens (SET) du combiné mobile (MT) pour l'initialisation du processus de programmation sont constitués de telle sorte que, s'ils sont actionnés de nouveau, le processus de programmation est terminé et, ainsi, la valeur modifiée du paramètre est transmise, par l'intermédiaire de la liaison radioélectrique sans fil, à la station de base (BS) et y est stockée dans la mémoire de base (SP).
